# EUROPEAN PATENT APPLICATION

(11) **EP 0 581 721 A1**
(43) Date of publication of application: **02.02.1994**
(21) Application number: 93630051.6
(22) Date of filing: 19.07.1993
(51) Int. Cl.: A61C 11/00, A61C 13/00

(54) **Dental articulator**

(30) Priority: 27.07.1992 ZA 925630
(71) Applicant: Westdyk, Alan Michael, Wingate Park, Transvaal Province (ZA)
(72) Inventor: Westdyk, Alan Michael, Wingate Park, Transvaal Province (ZA)
(74) Representative: Weydert, Robert

(57) **Abstract**

The articulator for a dental model consists of two dental casts, includes two connecting members (16) for partial embedding in a settable material a pair of connectors (14) and a hinge (12) consisting of two hinge elements (22). Each connecting member (16) forms one part of the spigot and socket joint and each pair of connectors (14) forms a second part of a spigot and socket joint. Each pair of connectors (14) has an interlocking formation for interlocking engagement with one of the hinge elements (22). The hinge elements (22) are pivotally linked and each has an interlocking formation complementary to the interlocking formations of the connectors (14).

## Description

THIS INVENTION relates to an articulator for a dental model. It relates in particular to an articulator for a dental model comprising two dental casts.

According to the invention there is provided an articulator for a dental model comprising two dental casts, the articulator comprising
a pair of connecting members for partial embedding in a settable material, each connecting member comprising one part of a spigot and socket joint,
a pair of connectors each comprising a second part of a spigot and socket joint, and each having an interlocking formation for interlocking engagement with a hinge element, and
a hinge comprising two of the hinge elements pivotally linked, each having an interlocking formation complementary to the interlocking formation of the connectors.

The spigot part of the spigot and socket joint may be of spherical shape.

Each connecting member may include a part of spherical shape of the spigot and socket joint. The spherical part may be bifurcated or split so that it comprises two hemispheres spaced from one another and defining a groove between them. The bifurcated hemispheres may each be mounted on a stalk. The connecting member may be of a resilient or elastically deformable material such as a synthetic plastics material so that the hemispheres may be resiliently or elastically displaceable away from and towards each other. The stalk may be integral with an engagement formation for engagement with a mould as hereinafter described.

The connecting member may be symmetrical in shape having a mirror plane of symmetry passing through it os that one side of the connecting member comprising the spherical part, the stalk and a portion of the engagement formation is the mirror image of the other side. The connecting member may thus be provided with two spherical parts, one of which, in use, is embedded in the settable material. The connecting member may, instead, be provided with any suitable spigot, lug, projection or the like for embedding in the settable material.

The engagement formation may be in the form of a plug of planar shape which, in use, plugs an opening in a mould for the dental cast. The engagement formation may further comprise at least one ridge or flange for engagement with at least one corresponding groove in the sides of the opening in the mould as hereinafter described.

The flange may have a tapering peripheral surface and may have a thickness such that the broadest part of the flange projects into the mould to form a ridge which diverges into the mould.

Each connector may include the socket part of a spigot and socket joint. The socket part may also be of a resilient or elastically deformable material such as a synthetic plastics material and may be generally hemispherical in shape. It may be provided with at least one slit so that the hemispherical socket may be opened by elastic deformability or resilience of the bifurcated spherical parts and the sockets. The spherical parts may, instead, be loosely received in the sockets with little friction between them.

The bifurcation of the spherical part and the slits in the sockets also advantageously results in a larger surface area for receiving an adhesive substance, and allowing the adhesive substance to spread as is described in further detail below.

The interlocking formations of the connectors and hinge elements may be of spigot and socket configuration. For example each connector may comprise the spigot portion and each hinge element may comprise the socket portion. Alternatively, each connector may comprise the socket portion and each hinge element the spigot portion.

Each spigot portion may further be provided with at least one raised engagement or guide formation, such as a ridge or spline, for engagement with a complementary recessed engagement or guide formation such as a groove or channel or spline in each socket portion. Preferably each spigot portion may have a cross-shaped cross sectional profile and each socket portion may have a complementary cross-shaped cross sectional profile. Thus, engagement of the spigot with the socket by inserting the one into the other will interlock the complementary profiles of the spigot and the socket so that rotation of the spigot in the socket is resisted.

The hinge elements may be connected together by a joint of flexible material. The hinge elements and the joint may be integral, the hinge comprising a single body of a flexible material, with the hinge elements being thicker than the flexible joint so that the hinge elements are pivotable about the joint.

Each hinge element may further be provided with reinforcing formations, for example in the form of ridges or ribs to reduce flexibility of the hinge element and enhance its rigidity. Each hinge element may be generally triangular in shape, with the joint of flexible material being located along one of the sides of the triangular shape and the socket portion of the spigot and socket interlocking formations being located on an apex of the triangular shape opposite to the side on which the joint is located.

The hinge and the connectors may be of different synthetic plastics material so that an adhesive will not readily form a bond between them. The hinge may, for example, be of polypropylene and the connectors may be of glass filled nylon. Thus, if an adhesive substance accidentally contaminates the spigot portion of the connector or the socket portion of the hinge, adhesion of the one to the other will be hindered or prevented.

The hinge may include a stay to limit the pivotal movement of the hinge elements with respect to one another. The stay may comprise a screw-threaded pin which can screw into a hole provided in one of the hinge elements and which can abut the other hinge element to thereby limit the pivotal movement of the hinge elements with respect to one another. The stay may alternatively have small nodules which can be ratcheted into the hole provided in one of the hinge elements and which can abut the other hinge element to thereby limit the pivotal movement of the hinge element with respect to one another.

The hole may be elongate in the form of a slot and may have a ridge with which the screw threads of the pin and/or the nodules can co-operate.

The pin may have a gripping formation in the form of a flattened region to facilitate gripping and turning of the pin in the hole.

According to another aspect of the invention there is provided a mould defining a moulding cavity for receiving a settable material for making a dental cast for use with an articulator for a dental model in accordance with the invention.

The mould may be substantially triangular in shape, simulating the shape of a person's jaw and may be open having a floor and side walls defining the moulding cavity into which the settable material may be poured, and may be provided with an opening for receiving an engagement formation as described above. The opening may have sides which are provided with at least one recess or groove for receiving at least one ridge or flange of the engagement formation.

The mould may be of a flexible material which is readily deformable to aid removal of the dental cast after it has set. It may further be provided with bevelled edges to aid removal of the cast after it has set.

According to another aspect of the invention there is provided an articulator kit comprising an articulator and a mould both in accordance with the invention

According to another aspect of the invention there is provided a connecting member for an articulator in accordance with the invention.

According to another aspect of the invention there is provided a connector for an articulator in accordance with the invention.

According to another aspect of the invention there is provided a hinge for an articulator in accordance with the invention.

According to another aspect of the invention there is provided a method of assembling a dental articulator, the method including the steps of
locating a connecting member in an opening in a mould defining a moulding cavity for a dental cast so that a portion of the connecting member projects from the mould and a portion projects into the moulding cavity; and
pouring a settable material into the mould and allowing the settable material to flow around the portion of the connecting member projecting into the moulding cavity and to set thereby forming a dental cast with the connecting member embedded in and projecting from the cast.

The connecting member and the mould may be as hereinbefore described.

The method may include the additional steps of attaching a pair of connectors and a hinge, both as hereinbefore described, to the connecting members of a pair of dental casts.

The invention is now described with reference to the accompanying drawings in which:-
Figure 1 is an exploded view of an articulator in accordance with the invention;
Figure 2 is a side view, on an enlarged scale, of the connector of the articulator shown in Figure 1;
Figure 3 is a front view, on an enlarged scale, of the connector of the articulator shown in Figure 1;
Figure 4 is an end view, on an enlarged scale, of the hinge socket of the articulator shown in Figure 1;
Figure 5 is a plan view, on an enlarged scale, of the connector and connecting members of the articulator shown in Figure 1 connected together;
Figure 6 is a fragmentary plan view, partly in section, on an enlarged scale, of the connecting member shown in Figure 5 mounted in a mould;
Figure 7 is a side view of another embodiment of a connecting member of the articulator shown in Figure 1;
Figure 8 is a fragmentary side view, partly in section, of the connecting member shown in Figure 7 mounted in a mould;
Figure 9 is a bottom view of another embodiment of a hinge of the articulator shown in Figure 1;
Figure 10 is a plan view of the hinge shown in Figure 9;
Figure 11 is a section on line XI-XI of the hinge in Figure 10;
Figure 12 is a side view of a stay for the hinge shown in Figures 9 to 11;
Figure 13 is a sectional view of the hinge of Figures 9 to 11 with the stay of Figure 12 retaining the hinge in an open position;
Figure 14 is a view similar to Figure 13 but with the hinge in a closed position; and
Figure 15 is a side view of an alternative embodiment of the stay shown in Figure 12.

In the drawings reference numeral 10 generally indicates a part of an articulator kit in accordance with the invention. The kit comprises a hinge generally indicated by reference numeral 12, a pair of connectors, each generally indicated by reference numeral 14, a pair of connecting members each generally indicated by reference numeral 16, and a pair of moulds each generally indicated by reference numeral 18. The second connecting member 16 and the second mould 18 have been omitted from the drawings.

The hinge 12 comprises two generally isosceles triangular-shaped hinge elements 22, each having a base 23, two sides 24 of equal length, and an apex 25 opposite the base 23. Each hinge element 22 is of a flexible material and the elements are connected to one another by a thin flexible joint 26 comprising a narrow web of the same material. In a particular embodiment of the invention the flexible material is polypropylene. The elements 22 are thus pivotable with respect to one another and comprise two halves of the hinge 12. The joint 26 extends along the base 23 of each of the elements 22. A raised ridge 30 extends along all three sides of the triangular shaped hinge element 22 to provide rigidity to the element.

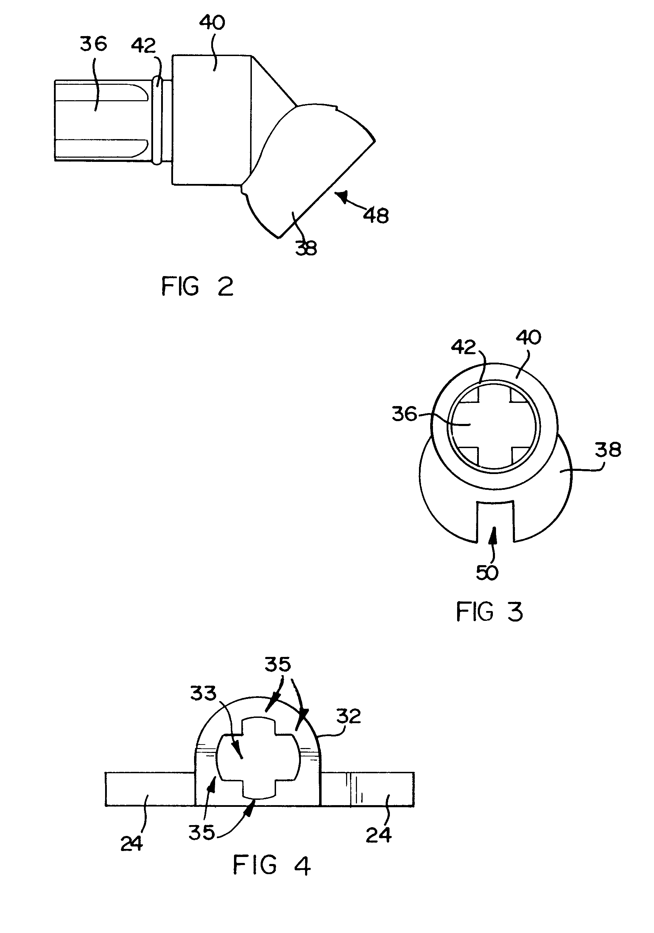

A cylindrical-shaped socket 32 having a cylindrical cavity 33 is provided at the apex 25 of the triangular-shaped element 22. The cavity 33 is provided with four symmetrically located inner grooves 35 (shown in Figure 4) so that it has an internal cross-shaped cross-sectional profile as is described in further detail below.

The connector 14 comprises a spigot 36 and a part-spherical socket 38 both mounted on a cylindrical base 40 as can be seen in Figure 2.

The spigot 36 also has a cross-shaped cross-sectional profile for most of its length and has an annular ridge 42 located near to the base 40. The cavity 33 of the cylindrical socket 32, which has a complementary cross-shaped cross-sectional inner profile as mentioned above, also has an annular groove (not shown) located near the rear of the cavity 33 complementary to the annular ridge 42 so that the spigot 36 may be snugly received in the cylindrical socket 30, their cross-shaped cross-sectional profiles engaging with one another and the ridge 42 nesting in the groove.

The part-spherical socket 38 comprises a hollow hemisphere having a cavity 48, and is provided with a pair of slits 50 located on opposite sides of the socket 38. In another configuration (not shown) the socket 38 may be cylindrical instead of part-spherical.

The connector 14 is of a flexible material and is elastically deformable as is described in more detail below. In a particular embodiment of the invention, when the hinge element 22 is of polypropylene, the connector 14 is of glass filled nylon. The spigot 36 and the cylindrical base 40 are co-axial as can be seen in Figure 2, while the cavity 48 of the socket 38 is directed away from the axis of the spigot 36 and the base 40, the socket 38 being directed at an angle of about 45° with respect to the spigot 36 as can be seen in Figure 2. The connector 14 is thus an angled connector.

The connecting member 16 comprises a planar oval engagement formation in the form of a plug 54, as is described in further detail below, with connecting formations in the form of a pair of cylindrical stalks 56 projecting symmetrically from opposite sides of the plug 54. Spigot formations in the form of bifurcated spheres 58 each comprising two hemispheres separated by a groove 59 are mounted at the ends of the stalks 56. In another configuration (not shown) the spigot formations 58 may be of cylindrical shape instead of spherical shape. The connecting member 16 is also of a flexible material, which is elastically deformable, so that the two hemispheres of the spheres 58 are elastically displaceable relative to one another. The groove 59 facilitates such displacement. In a particular embodiment of the invention, the connecting member 16 is of glass filled nylon.

In this embodiment of the invention the bifurcated spheres 58 are received with a friction fit in the sockets 38 so that after insertion of the spheres 58 into the sockets 38 as is described in further detail below, the spheres 58 are loosely held in a particular orientation by said friction fit. In another embodiment of the invention the spheres 58 are received in the sockets 38 with little frictional resistance to movement of said spheres. In this embodiment of the invention the spheres are immobilized for the first time by the adhesive as described in further detail below.

The mould 18 is in the shape of an isosceles triangle having rounded apices and defines a moulding cavity 19. The mould 18 has a base wall 66 corresponding to the base of the triangle, side walls 68 corresponding to the sides of the triangle, and a floor 70. The sides 66, 68 and the floor 70 define a cavity for receiving a settable material.

An oval-shaped opening 74 complementary to the oval plug 54 is provided approximately in the middle of the base wall 66 of the mould 18. The side wall of the opening 74 is provided with a groove 78 for receiving the edges of the plug 54 as is described in further detail below.

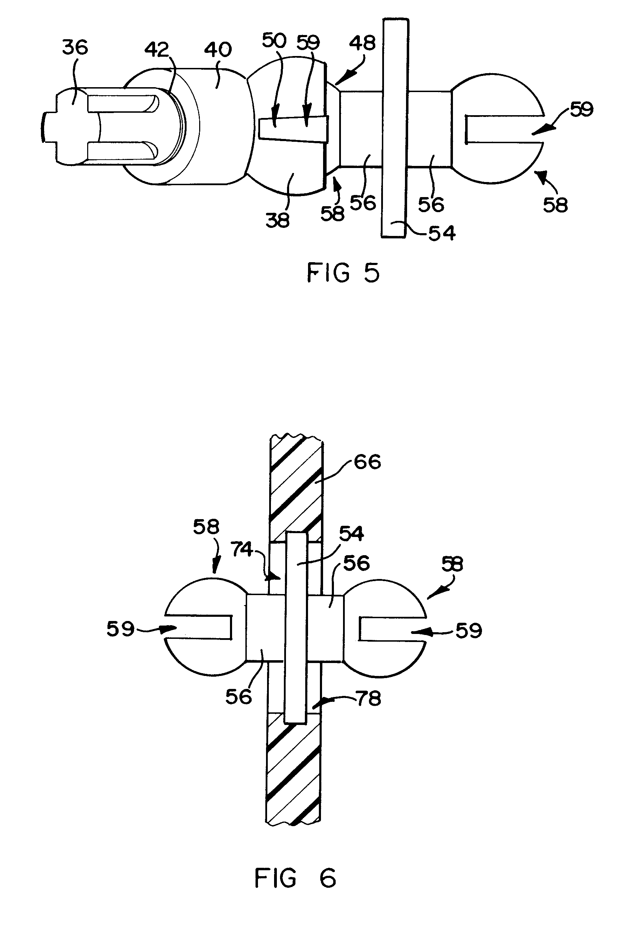

In use, the connecting member 16 is inserted into the opening 74 so that the bifurcated sphere 58 on the stalk 56 projects into the moulding cavity 19 and the edges of the plug 54 are received in the grooves 78 of the opening 74 as can be seen in Figure 5. The connecting member can be inserted into and removed from the opening 74 from either side. A dental cast (not shown) is then formed by pouring a settable material, such as wet plaster of Paris, into the mould 18 and allowing it to flow around the sphere 58 and stalk 56, and to set.

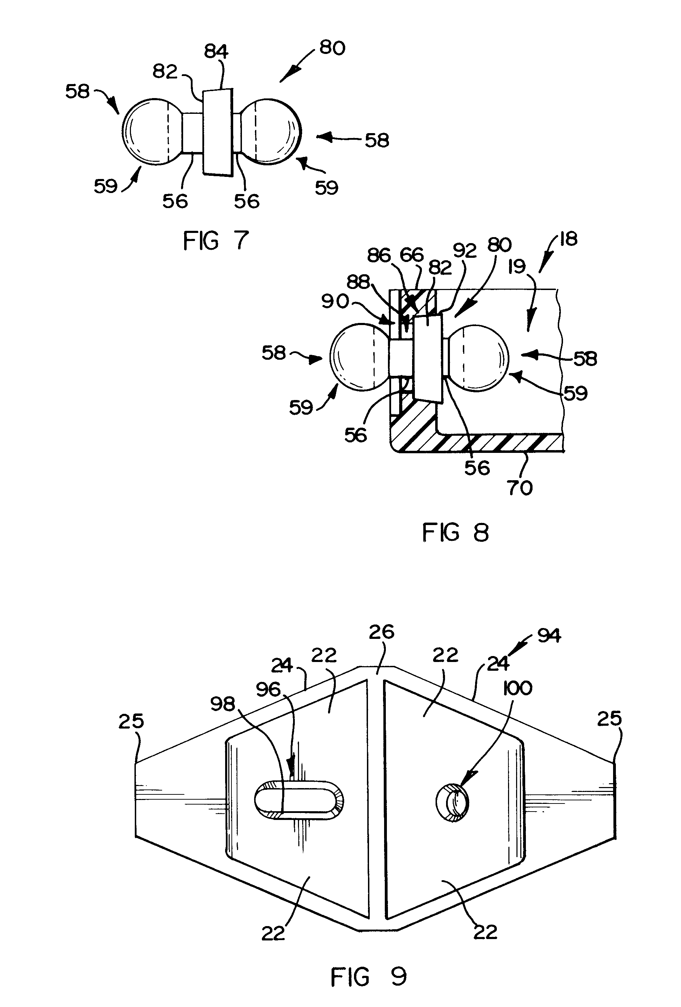

In another embodiment of the invention, shown in Figures 7 and 8 and described in more detail below, a portion of the plug 54 protrudes into the cavity 19 depending upon the thickness of the plug 54, so that the portion of the plug also becomes embedded in the plaster of Paris.

After setting, the cast, in which the connecting member 16 is embedded, is removed from the mould by deforming the sides and floor of the mould, the connecting member 16 being withdrawn inwardly through the opening 74 as the cast is removed from the mould 18. The spigot 36 of the connector 14 is then inserted into the cavity 33 of the socket 32 of the hinge 12. This process is repeated with a second mould 18.

The dental casts are then aligned in a desired orientation determined by the patient's registered bite. The sphere 58 of the connecting member 16 is placed in the socket 38 of the connector 14. Once the desired orientation of the casts has been obtained, a quick setting adhesive such as a cyanoacrylate adhesive is applied into the slits 50 where it quickly spreads to cover the outer surfaces of the bifurcated sphere 58, and the inner surfaces of the cavity 48 of the socket 38, before setting and immobilising the sphere 58 in the socket 38, and thus holding the casts in the desired orientation. At the same time, the cross-sectional profile of the spigot 36 and the cross-sectional profile of the cavity 33 of the socket 32 prevent rotation of the connector 14 with respect to the hinge 12.

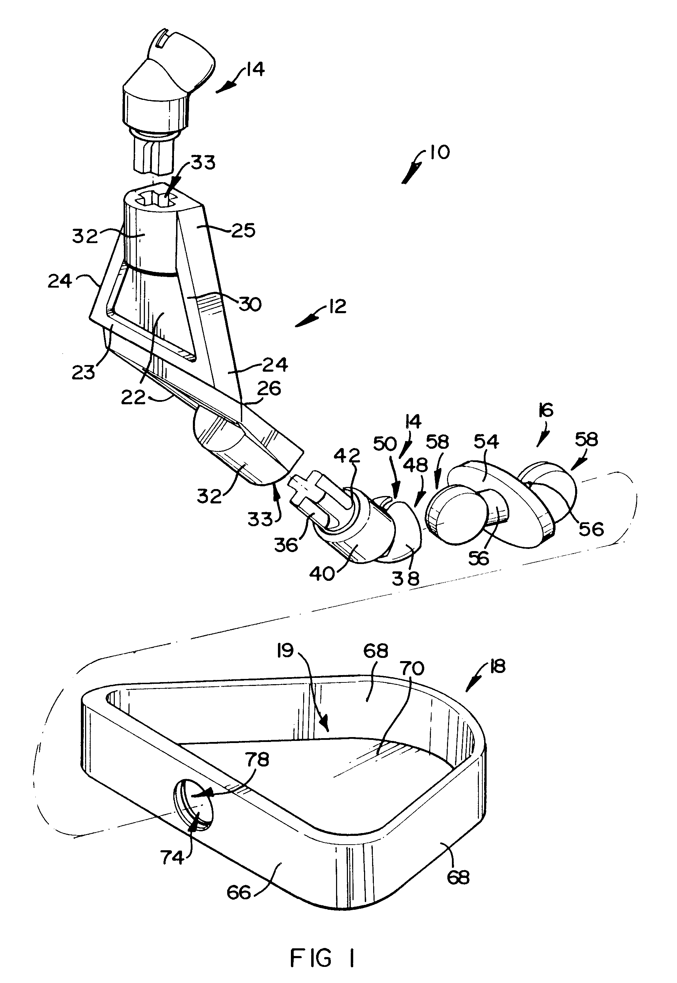

Referring to Figure 7, another embodiment 80 is shown of a connecting member similar to the connecting member 16 shown in Figures 1, 5 and 6. The stalks 56, the spheres 58 and the grooves 59 of the connecting member 80 are the same as for the connecting member 16. The plug 82 is similar to but differs from the plug 54 of the connecting member 16 in that the plug 82 has a tapering peripheral surface 84.

Referring to Figure 8, the connecting member 80 is shown mounted in the base wall 66 of the mould 18 having a floor 70 and a moulding cavity 19 as shown in Figure 1. A tapering opening 86 complementary to the plug 82 is provided in the wall 66. The opening 86 narrows to an opening 88 which widens into an opening 90 on the outside of the wall 66.

Referring to Figure 8, in use the connecting member 80 is inserted into the tapering opening 86 so that the plug 82 seats in the opening 86 and one sphere 58 projects into the moulding cavity 19 and the other sphere 58 projects outside the wall 66 through the opening 90. A portion of the plug 82 projects into the moulding cavity 19 to form a ridge 92 diverging into the moulding cavity 19. The ridge 92 forms a gripping surface as will be described below. A dental cast (not shown) is then formed by pouring a settable material, such as wet plaster of Paris, into the mould 18 and allowing it to flow around the sphere 58, the stalk 56 and the ridge 92 on the plug 82, and to set. The tapering ridge 92 forms a gripping surface which enhances the retention of the plug 82 and thus of the connecting member 80 in the dental cast.

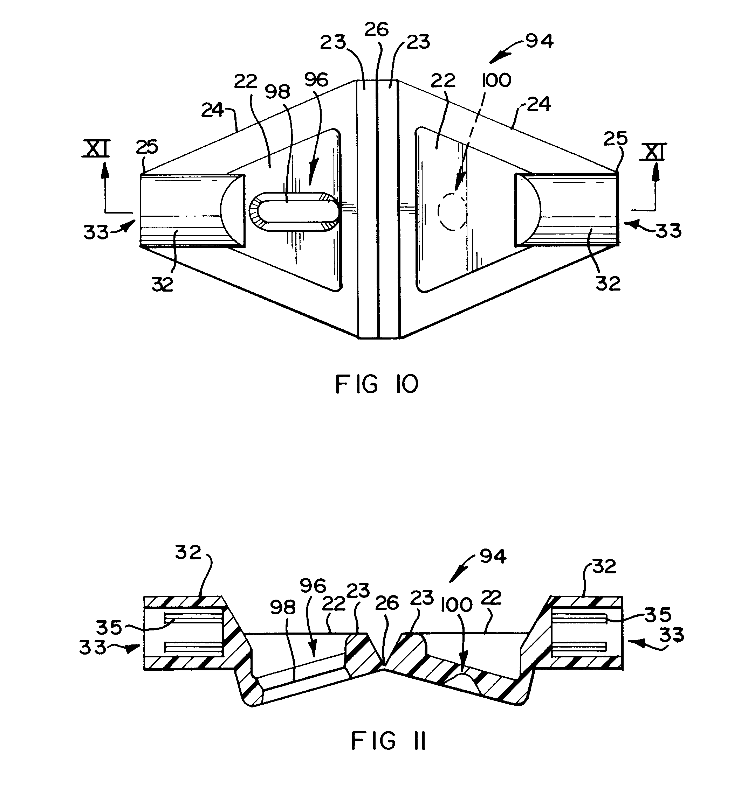

Referring to Figures 9, 10 and 11, there is shown another embodiment 94 of the hinge 12 shown in Figure 1. The parts 22, 23, 24, 25, 26, 30, 32, 33 and 35 are the same as the like numbered parts of the hinge 12 shown in Figure 1. The difference is that an elongate slot 96 having a ridge 98 is provided in the one hinge element 22 and a conical recess 100 in the other hinge element 22.

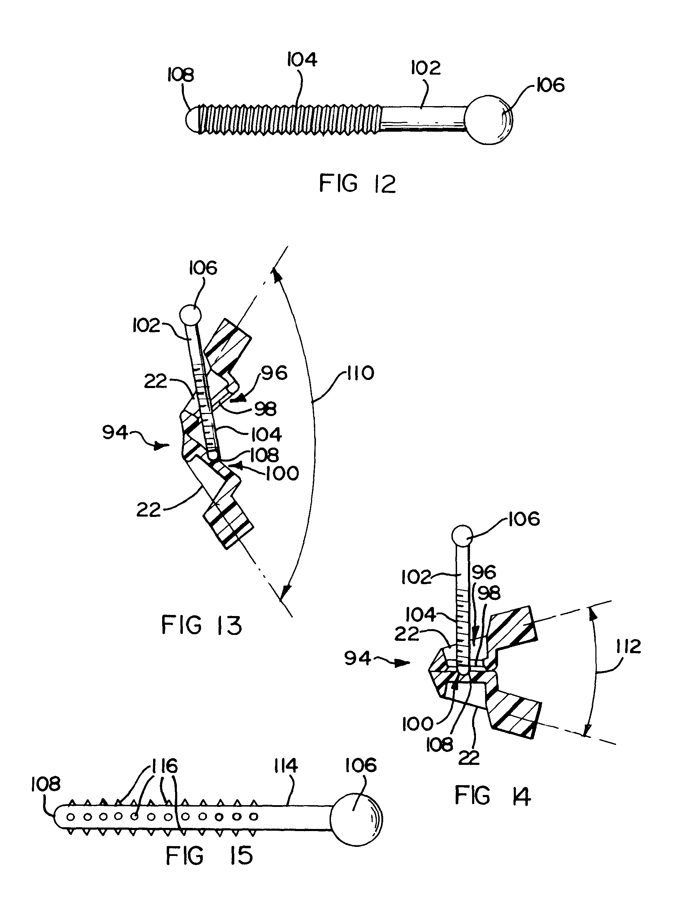

Referring to Figures 12,13 and 14, there is shown a pin 102 having a screw-threaded region 104, a gripping part 106 and a rounded end 108. The pin 102 is screwed onto the ridge 98 to extend through the slot 96 to abut and seat in the recess 100. The pin 102 constitutes a stay for limiting the pivotal displacement of the hinge elements 22 with respect to one another. By screwing the pin 102 onto or out of the ridge 98 in the slot 96 the pivotal displacement of the hinge elements 22 with respect to one another can be limited and adjusted as required. Figure 13 shows the pin 102 screwed through the slot 96 to such an extent that a fully open position with a maximum angle of displacement 110 between the hinge elements 22 can be effected. Figure 14 shows the pin 102 screwed through the slot 96 to a limited extent such that a closed position with a minimum angle of 112 between the hinge elements 22 can be effected. The angle 110 may be 110° and the angle 112 may be 30°. Since the rounded end 108 of the pin 102 merely seats in the recess 100 and is not secured in the recess, the angular orientation of the hinge elements with respect to one another is determined by the relevant position of the pin 102 in the slot 96, and can be adjusted by screwingly adjusting the pin. In order to permit the screw threads 104 to engage the ridge 98 from the closed position of the hinge 94 shown in Figure 14 to the open position of the hinge shown in Figure 13, the screw threads 104 are not parallel to each other. The screw threads 104 instead are inclined to each other. The angle of inclination of the screw threads 104 to the longitudinal axis of the pin 102 varies from 85° at the end 108 to 50° near the gripping part 106.

Referring to Figure 15, there is shown an alternative embodiment 114 of the pin 102 shown in Figures 12, 13 and 14. The pin 114 also has a gripping part 106 and a rounded end 108. Instead of screw threads 104 the pin 114 has a plurality of nodules 116 arranged in rows and projecting from the pin. The nodules 116 co-operate with the ridge 98 in the slot 96. The pin can be moved into or out of the slot 96 as desired by ratcheting the nodules over the ridge 98 so that the rounded end 108 can seat in the recess 100. The function of the pin 114 is the same as that of the pin 102 as described with reference to Figures 12, 13 and 14.

It is an advantage of the invention that the articulator may be assembled before the plaster of the cast is fully dried (this process generally takes a considerable time often requiring extended air-drying or oven drying), as is the case with prior art articulators, where the mounting member is adhesively attached to the cast only after the cast has fully dried.

It is a further advantage of the invention that the cross-shaped cross-sectional profiles of the spigot 36 and cavity 33 of the socket 32 of the connector 14 and hinge 12 respectively prevent rotation of the cast relative to the hinge 12. This is of particular importance, since the dental model is frequently disassembled by removal of the spigot 36 from the cavity 33 when a dental technician is working with the model. The interlocking cross-sectional profiles allow the model to be reassembled without any change or at least with minimal change in the orientation of the dental casts. It is also an advantage of the invention that the bifurcation of the spheres 58 of the mounting member 16 and the slits 50 in the socket 38 of the connector 14 enable rapid penetration and spreading of the adhesive used to secure the connector and mounting member together. Finally, it is an advantage of the invention that the parts of the articulator are of elastically deformable resilient material so that assembling and disassembling the articulator before application of the adhesive is quick and easy to perform.

## Claims

1. An articulator 10 for a dental model comprising two dental casts, characterised in that the articulator comprises
a pair of connecting members 16 for partial embedding in a settable material, each connecting member 16 comprising one part of a spigot and socket joint,
a pair of connectors 14 each comprising a second part of a spigot and socket joint, and each having an interlocking formation 36 for interlocking engagement with a hinge element 22, and
a hinge 12 comprising two of the hinge elements 22 pivotally linked, each having an interlocking formation 33 complementary to the interlocking formation 36 of the connectors.

2. An articulator 10 as claimed in Claim 1, characterised in that the spigot part 58 of the joint is of spherical shape.

3. An articulator 10 as claimed in Claim 2, characterised in that the spigot part 58 of spherical shape is bifurcated and comprises two hemispheres spaced from one another and defining a groove between them.

4. An articulator 10 as claimed in Claims 2 or Claim 3, characterised in that the spigot part 58 of spherical shape is provided on the connecting member 16 and is mounted on a stalk 56 and is of a resiliently deformable material.

5. An articulator 10 as claimed in Claim 4, characterised in that each connecting member 16 has two spigot parts 58 of spherical shape on the stalk 56 and spaced apart by the stalk 56, and an engagement formation 54 on the stalk 56 between the spigot parts 58.

6. An articulator 10 as claimed in Claim 5, characterised in that the engagement formation 54 comprises a plug of planar shape extending transversely to the stalk and being adapted to plug an opening in a mould for the dental cast.

7. An articulator 10 as claimed in Claim 6, characterised in that the plug has a peripheral surface which tapers in the axial direction of the stalk.

8. An articulator 10 as claimed in any one of the preceding claims, characterised in that each connector 14 includes the socket part 38 of a spigot and socket joint.

9. An articulator 10 as claimed in Claim 8, characterised in that the socket part 38 of the connector is of hemispherical shape including at least one slit 50 extending inwardly from its periphery, the socket part 38 being of a resiliently deformable material.

10. An articulator 10 as claimed in any one of the preceding claims, characterised in that the interlocking formations of the connectors 14 and of the hinge elements 22 are of the spigot and socket configuration.

11. An articulator 10 as claimed in Claim 10, characterised in that the spigot formation 36 has a guide formation engageable with a complementary recessed guide formation in the socket formation 32 to prevent rotation of the spigot formation 36 relative to the socket formation 32.

12. An articulator 10 as claimed in any one of the preceding claims, characterised in that the hinge elements 22 are connected to one another by a joint 26 of flexible material.

13. An articulator 10 as claimed in Claim 12, characterised in that each hinge element 22 is generally triangular in shape with the joint 26 of flexible material being located along one of the sides of the triangular shape and the interlocking formations 32 are located on an apex of the triangular shape opposite to the side on which the joint 26 is located.

14. An articulator 10 as claimed in any one of the preceding claims, characterised in that the hinge 12 and the connectors 14 are of different synthetic plastic materials so that an adhesive will not readily form a bond between them.

15. An articulator 10 as claimed in any one of the preceding claims, characterised in that the hinge 12 includes a stay 102 to limit pivotal movement of the hinge elements 22 with respect to one another.

16. An articulator 10 as claimed in Claim 15, characterised in that the stay 102 comprises a pin having restraining formations 104 and which pin can be displaced into a hole 96 provided in one of the hinge elements 22 and which pin can abut the other hinge element 22, the restraining formations 104 engaging the edge of the hinge element 22 defining the hole 96 to locate the pin in the hole 96, the pin thereby limiting the pivotal movement of the hinge elements 22 with respect to one another.

17. An articulator 10 as claimed in Claim 16, characterised in that the hole 96 is elongate and has a ridge 98 with which the restraining formations 104 of the pin can co-operate.

18. An articulator 10 as claimed in Claim 16 or Claim 17, characterised in that the restraining formations 104 are screw threads.

19. An articulator 10 as claimed in Claim 16 or Claim 17, characterised in that the restraining formations 104 are nodules.

20. A mould 18 defining a moulding cavity 19 for receiving a settable material for making a dental cast for use with a dental articulator 10 for a dental model as claimed in any one of Claims 1 to 19, characterised in that the mould is substantially triangular in shape, simulating the shape of a person's jaw and being open having a floor 70 and side walls 68 defining the moulding cavity 19 into which the settable material may be poured, and being provided with an opening 74 for receiving an engagement formation 58 as claimed in any one of Claims 6 to 19.

21. A dental articulator kit characterised in that it comprises a dental articulator 10 as claimed in any one of Claims 1 to 19 and a mould 18 as claimed in Claim 20.

22. A connecting member 16 for a dental articulator 10 as claimed in any one of Claims 1 to 19, characterised in that it comprises two portions, one portion 58 being a part of a spigot and socket joint and the other portion 58 being an embedding portion for embedding in the settable material.

23. A connecting member 16 as claimed in Claim 22, characterised in that the spigot part 58 of the joint is of spherical shape.

24. A connecting member 16 as claimed in Claim 23, characterised in that the joint of spherical shape is bifurcated comprising two hemispheres 58 and is mounted on a stalk 56 and is of a resilient elastically deformable material so that the hemispheres 58 are resiliently displaceable away from and towards each other.

25. A connector 14 for a dental articulator 10 as claimed in any one of Claims 1 to 19, characterised in that the connector 14 comprises one part of a spigot and socket joint and has an interlocking formation 36 for interlocking engagement with a hinge element 22.

26. A connector 14 as claimed in Claim 25, characterised in that it comprises a socket part 38 of a spigot and socket joint, said socket part 38 being of a resilient elastically deformable material and being generally hemispherical in shape and being provided with at least one slit 50 so that the size of the hemispherical shaped socket 38 may be enlarged and reduced by elastic deformation of the material from which the socket 38 is made.

27. A connector 14 as claimed in Claim 25 or Claim 26, characterised in that interlocking formations 36, 33 of the connectors 14 and hinge elements 22 are of the spigot and socket type, each spigot 36 being provided with at least one raised guide formation for engagement with a complementary recessed guide formation in each socket portion 33.

28. A hinge 12 for an articulator 10 as claimed in any one of Claims 1 to 19, characterised in that the hinge 12 comprises two hinge elements 22 which are linked together by a joint 26 of flexible material, each element 22 being provided with reinforcing formations in the form of ridges 30 to reduce flexibility of the hinge element 22 and enhance its rigidity.

29. A method of assembling a dental articulator 10,
characterised in that the method includes the steps of
locating a connecting member 16 in an opening 74 in a mould 18 defining a moulding cavity 19 for a dental cast so that a portion 58 of the connecting member 16 projects from the mould 18 and a portion 58 projects into the moulding cavity 19; and
pouring a settable material into the mould 18 and allowing the settable material to flow around the portion 18 of the connecting member 16 projecting into the moulding cavity 19 and to set thereby forming a dental cast with the connecting member 16 embedded in and projecting from the cast.

30. A method as claimed in Claim 29, characterised in that it includes attaching a pair of connectors 14 as claimed in any one of Claims 25 to 27 and a hinge 12 as claimed in Claim 28 to the connecting members 16 of the dental cast.
